# EUROPEAN PATENT APPLICATION

(11) **EP 4 224 871 A1**
(43) Date of publication of application: **09.08.2023**
(21) Application number: 21874333.4
(22) Date of filing: 23.09.2021
(51) Int. Cl.: H04N 21/4402, H04N 19/597

(54) **POINT CLOUD DATA PROCESSING METHOD AND APPARATUS, AND STORAGE MEDIUM AND ELECTRONIC APPARATUS**

(30) Priority: 30.09.2020 CN 202011063014
(71) Applicant: ZTE Corporation, Shenzhen, Guangdong 518057 (CN)
(72) Inventor: BAI, Yaxian, Shenzhen, Guangdong 518057 (CN); HUANG, Cheng, Shenzhen, Guangdong 518057 (CN)
(74) Representative: Brunazzi, Stefano
(86) International application number: PCT/CN2021/119964
(87) International publication number: WO 2022/068672

(57) **Abstract**

Embodiments of the present invention provide a point cloud data processing method and device, a storage medium and an electronic device. The method includes that: static geometry encoding point cloud data containing region information of a 3D scene is determined, the static geometry encoding point cloud data being represented by G-PCC item data; partial item data corresponding to partial region of the 3D scene in the static geometry encoding point cloud data is decoded; and the partial region of the 3D scene is rendered based on the decoded data. The problem of low parsing efficiency and large time consumption in the related art caused by being necessary to traverse the complete point cloud data before identifying part of the point cloud data required by users can be solved. Part of required item data is determined according to user needs, so that the part of required item data can be obtained without traversing the complete point cloud data, which improves the decoding efficiency, shortens the decoding time, and shortens the rendering waiting time of users.

## Description

### Cross-Reference to Related Application

The present invention is based upon and claims priority to Chinese patent application No. 202011063014.X filed on September 30, 2020 and entitled 'Point Cloud Data Processing Method and Device, Storage Medium, and Electronic Device', the invention of which is hereby incorporated by reference in its entirety.

### Technical Field

Embodiments of the present invention relate to the field of communications, and in particular to a point cloud processing method and device, a storage medium, and an electronic device.

### Background

There are many ways to describe a three-dimensional (3D) world in an immersive media technology. In addition to VR panoramic videos, a 3D object may also be directly digitized through a laser radar or camera matrix to represent the 3D object by independent points and planes, namely 3D point cloud. Point cloud is a group of randomly distributed discrete points in space that express the spatial structure and surface properties of a 3D object or scene. Each point in the point cloud has at least 3D location information, and may also have color, material, or other information according to different application scenes. The point cloud may be captured by multiple cameras and depth sensors. The number of points may range from thousands to billions. There is no connection and order among points, and the points may be sorted randomly. So the point cloud has attracted wide attention in the industry due to its flexible and convenient expression form and high data accuracy.

The point cloud is relatively easy to be captured and rendered compared to other volumetric media formats. Application scenes of the point cloud include: autonomous driving, real-time inspection, cultural heritage, 6DoF immersive real-time communication, etc. According to time information representation of the point cloud, the point cloud may be divided into static point cloud and dynamic point cloud. For application scenes of large static point cloud, such as cities and streets, users usually only need to pay attention to part of point cloud data when applying the point cloud data, without obtaining a complete point cloud object. For example,
1) for the point cloud data of large and complex scenes such as geographic information system, scenes are selected according to geographical areas and viewed randomly; for digital cultural heritages, perspective selection according to the point of view and virtual visit are supported;
2) large and complex scenes and maps can be viewed from far to near and from coarse to fine; for digital cultural heritages, progressive rendering, picture scaling and detail viewing are supported; and
3) for the scene of multiple point cloud objects associated and applied, some 3D point clouds are selected according to the objects for decoding and rendering.

For the above application scenes, users only pay attention to the point cloud data in some areas or the point cloud data containing some details. In an existing technical scheme for the static point cloud, a decoder usually needs to traverse a complete point cloud code stream to identify part of the point cloud data required by users. For large point cloud objects, such as an urban scene and map navigation, this solution is low in parsing efficiency and long time-consuming. In an existing static point cloud storage scheme, a whole object is usually used as a storage unit, which is not conducive to parallel decoding and has low flexibility.

For the problem of low parsing efficiency and long time consumption in the related art caused by being necessary to traverse the complete point cloud data before identifying part of the point cloud data required by users, no solution has been proposed.

### Summary

Embodiments of the present invention provide a point cloud data processing method and device, a storage medium, and an electronic device to at least solve the problem of low parsing efficiency and long time consumption in the related art caused by being necessary to traverse the complete point cloud data before identifying part of the point cloud data required by users.

According to an embodiment of the present invention, a point cloud data processing method is provided, which may include the following steps.

Static geometry encoding point cloud data containing region information of a 3D scene is determined, wherein the static geometry encoding point cloud data is represented by Geometry-based Point Cloud Compression (G-PCC) item data.

Partial item data corresponding to partial region of the 3D scene in the static geometry encoding point cloud data is decoded;

The partial region of the 3D scene is rendered based on the decoded data.

According to another embodiment of the present invention, a point cloud data processing method is also provided, which may include the following steps.

Static geometry encoding point cloud data containing Level of Details (LoD) information of a 3D scene is determined, wherein the static geometry encoding point cloud data is represented by the G-PCC item data.

Partial item data corresponding to partial LoD of the 3D scene in the static geometry encoding point cloud data is decoded;

The partial LoD of the 3D scene is rendered based on the decoded data;

According to another embodiment of the present invention, a point cloud data processing device is also provided, which may include: a first determining module, a first decoding module, and a first rendering module.

The first determining module is configured to determine static geometry encoding point cloud data containing region information of a 3D scene. The static geometry encoding point cloud data is represented by the G-PCC item data.

The first decoding module is configured to decode partial item data corresponding to partial region of the 3D scene in the static geometry encoding point cloud data.

The first rendering module is configured to render the partial region of the 3D scene based on the decoded data.

According to another embodiment of the present invention, a point cloud data processing device is also provided, which may include: a second determining module, a second decoding module, and a second rendering module.

The second determining module is configured to determine static geometry encoding point cloud data containing LoD information of a 3D scene. The static geometry encoding point cloud data is represented by the G-PCC item data.

The second decoding module is configured to decode partial item data corresponding to partial LoD of the 3D scene in the static geometry encoding point cloud data.

The second rendering module is configured to render the partial LoD of the 3D scene based on the decoded data.

According to yet another embodiment of the present invention, a computer-readable storage medium is also provided, in which a computer program is stored. The computer program is configured to execute the steps in any above method embodiment when running.

According to yet another embodiment of the present invention, an electronic device is also provided, which includes a memory and a processor. The memory stores a computer program. The processor is configured to run the computer program, so as to perform steps in any of the above method embodiments.

Through the present invention, the problem of low parsing efficiency and long time consumption in the related art caused by being necessary to traverse the complete point cloud data before identifying part of the point cloud data required by users can be solved; partial item data required is determined according to user needs, so that the partial item data required can be obtained without traversing the complete point cloud data, which improves the decoding efficiency, shortens the decoding time, and shortens the rendering waiting time of users.

### Brief Description of the Drawings

Fig. 1 is a structural block diagram of hardware of a mobile terminal for a point cloud data processing method according to an embodiment of the present invention.
Fig. 2 is flowchart 1 of a point cloud data processing method according to an embodiment of the present invention
Fig. 3 is flowchart 2 of a point cloud data processing method according to an embodiment of the present invention.
Fig. 4 is a schematic diagram of a static point cloud single-item storage structure according to the present embodiment.
Fig. 5 is a schematic diagram of a static point cloud multiple-item storage structure according to the present embodiment.
Fig. 6 is a schematic diagram of static point cloud storage based on a subsample according to the present embodiment.
Fig. 7 is a schematic diagram of subsample division based on a region according to the present embodiment.
Fig. 8 is a schematic diagram of static point cloud storage based on a tile item according to the present embodiment.
Fig. 9 is a schematic diagram of static point cloud storage based on a 3D region property and subsample according to the present embodiment.
Fig. 10 is a schematic diagram of static point cloud storage based on a region item according to the present embodiment.
Fig. 11 is a schematic diagram of subsample division based on layer information according to the present embodiment.
Fig. 12 is a schematic diagram of static point cloud storage based on a layer item according to the present embodiment.
Fig. 13 is a schematic diagram of static point cloud storage based on a region and LoD according to the present embodiment.
Fig. 14 is a schematic diagram of static point cloud region marking according to the present embodiment.
Fig. 15 is a schematic diagram of associated storage between a static point cloud and a dynamic point cloud according to the present embodiment.
Fig. 16 is block diagram 1 of a point cloud data processing device according to the present embodiment.
Fig. 17 is block diagram 2 of a point cloud data processing device according to the present embodiment.

### Detailed Description of the Embodiments

The present invention is elaborated below with reference to the accompanying drawings and embodiments.

It should be noted that the specification and claims of the present invention and terms 'first', 'second', etc. in the foregoing drawings are used for distinguishing similar objects rather than describing a specific sequence or a precedence order.

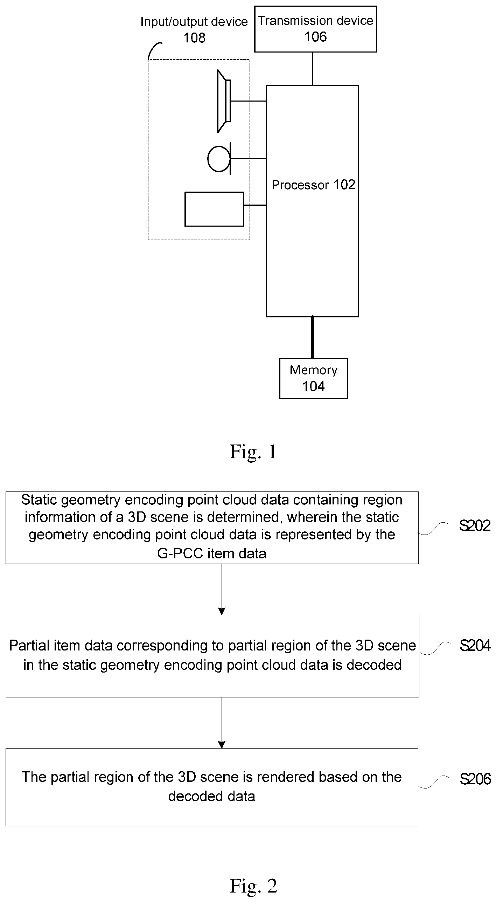

The method embodiment provided by the embodiments of the present invention may be performed in a mobile terminal, a computer terminal or similar operating devices. Taking that the method is executed in a mobile terminal as an example, Fig. 1 is a structural block diagram of hardware of a mobile terminal for a point cloud data processing method according to an embodiment of the present invention. As shown in Fig. 1, the mobile terminal may include one or more (only one is shown in Fig. 1) processors 102 (the processor 102 may include, but not limited to, a Micro Processor Unit (MCU) or a Field Programmable Gate Array (FPGA), and other processing devices), a memory 104 for storing data. The mobile terminal may also include a transmission device 106 for a communication function and an input and output device 108. Those of ordinary skill in the art should know that the structure shown in Fig. 1 is only schematic and not intended to limit the structure of the mobile terminal. For example, the mobile terminal may also include more or less components than that in Fig. 1, or has a configuration different from that in Fig. 1.

The memory 104 may be configured to store a computer program, for example, a software program and module of application software, for example, a computer program corresponding to the data processing method in the embodiments of the present invention. The processor 102 runs the computer program stored in the memory 104, thereby executing various functional applications and data processing, namely implementing the above method. The memory 104 may include a highspeed random access memory and may also include a nonvolatile memory, for example, one or more magnetic storage devices, flash memories or other nonvolatile solid-state memories. In some examples, the memories 104 may further include memories remotely set relative to the processor 102, and these remote memories may be connected to the mobile terminal through the network. Examples of the networks include, but are not limited to, the Internet, the Intranet, a local area network, a mobile communication network and a combination thereof.

The transmission device 106 is configured to receive or send data through a network. A specific example of the network may include a wireless network provided by a communication provider of the mobile terminal. In an example, the transmission device 106 includes a Network Interface Controller (NIC), which may be connected with other network devices through a base station, thereby communicating with the Internet. In an example, the transmission device 106 may be a Radio Frequency (RF) module, which is configured to communicate with the Internet in a wireless manner.

In the present embodiment, a point cloud data processing method running at the mobile terminal or network architecture is provided. Fig. 2 is flowchart 1 of a point cloud data processing method according to an embodiment of the present invention. As shown in Fig. 2, the flow may include the following steps.

S202, static geometry encoding point cloud data containing region information of a 3D scene is determined, wherein the static geometry encoding point cloud data is represented by the G-PCC item data.

In the present embodiment, the G-PCC item data consists of geometry item data and one or more types of attribute item data. The geometry item data and the attribute item data are divided into multiple layers, and the G-PCC item data of each layer consists of a group of uniformly distributed point sets.

S204, partial item data corresponding to partial region of the 3D scene in the static geometry encoding point cloud data is decoded.

S206, the partial region of the 3D scene is rendered based on the decoded data.

Through the above steps S202 to S206, the problem of low parsing efficiency and long time consumption in the related art caused by being necessary to traverse the complete point cloud data before identifying partial point cloud data required by users can be solved; part of required item data is determined according to user needs, so that the partial item data required can be obtained without traversing the complete point cloud data, which improves the decoding efficiency, shortens the decoding time, and shortens the rendering waiting time of users.

In the present embodiment, the G-PCC item data is determined by item types in a meta box. The item types at least include: G-PCC item, G-PCC tile item, and G-PCC region item.

In an embodiment, S204 may specifically include that: in the case that the item type is the G-PCC item, the partial item data corresponding to one or more tiles is determined according to a subsample item property associated with the G-PCC item in the meta box, further, the partial item data corresponding to one or more tiles is determined according to a first subsample data type and tile identifier in the subsample item property, and the partial item data is decoded.

In an embodiment, S204 may specifically include: in the case that the item type is the G-PCC item, the partial item data corresponding to one or more regions is determined according to the subsample item property associated with the G-PCC item in the meta box and a 3D region item property, further, the partial item data corresponding to one or more regions is determined according to a second subsample data type and region identifier in the subsample item property, and the partial item data is decoded. The 3D region item property includes: the number of regions, descriptive information of regions, the number of tiles that regions contain, and identifiers corresponding to the tiles that regions contain. The descriptive information of regions includes: region identifiers, anchor point coordinates, and the length, width and height of the regions.

In an embodiment, S204 may specifically include: in the case that the item type is the G-PCC tile item, the point cloud data containing the 3D static scene is identified according to a complete point cloud group; the partial item data corresponding to one or more tiles is determined according to a point cloud tile inventory in a G-PCC configuration item property and one or more G-PCC tile items in the meta box, and the partial item data is decoded. In an embodiment, the G-PCC tile item contains a single tile described in the point cloud tile inventory. Each of the one or more tiles represents a data subset that can be decoded independently in the point cloud region.

In an embodiment, S204 may specifically include: in the case that the item type is the G-PCC region item, the point cloud data containing the 3D static scene is identified according to the complete point cloud group; the partial item data corresponding to one or more point cloud regions is determined according to one or more G-PCC region items in the meta box and a region descriptive item property associated with the region item, and the partial item data is decoded. Each of the one or more point cloud regions corresponds to a single region described through the region descriptive item property. In an embodiment, the region descriptive item property includes: region identifiers, anchor point coordinates, and the length, width and height of regions.

In an embodiment, the complete point cloud group includes: the maximum number of point cloud subsets of partial access that can be divided in a complete point cloud object, types of point cloud subsets, and identifiers of point cloud subsets. The point cloud subsets include: a point cloud subset divided according to the tile and a point cloud subset divided according to the region.

In an embodiment, S202 may specifically include: in the case that the item type is the G-PCC region item, the partial item data used for indicating a marking scene is determined according to a region marking group, and the partial item data is decoded. The region marking group at least includes a marking type and a marking text. Part of the G-PCC item used for indicating a marking scene is described through the marking type and the marking text.

In an embodiment, one or more media resources associated with the partial item data are determined and obtained. Specifically, one or more media resources associated with the partial item data may be determined and obtained according to a multiple entity play out group. The one or more media resources are decoded while the partial item data is decoded. The one or more media resources are played while the partial region of the 3D scene is rendered based on the decoded data. In an embodiment, the media resources at least include: videos, audios and dynamic point clouds.

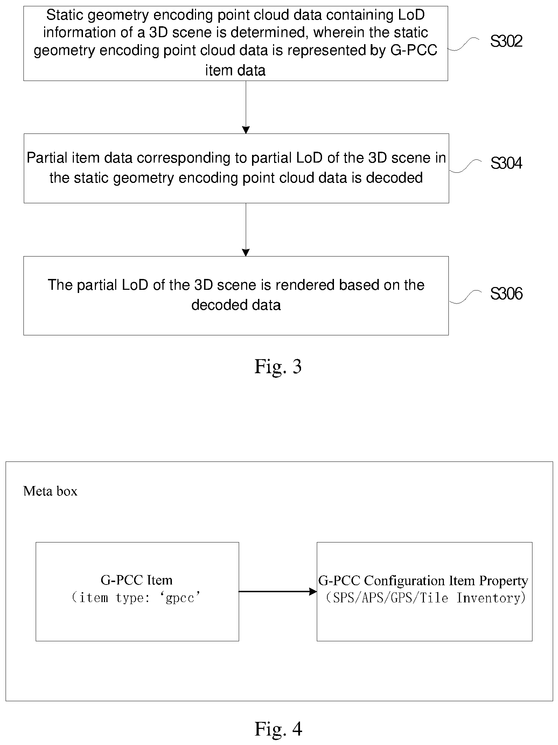

According to another embodiment of the present invention, a point cloud data processing method is also provided. Fig. 3 is flowchart 2 of a point cloud data processing method according to an embodiment of the present invention. As shown in Fig. 3, the flow may include the following steps.

S302, static geometry encoding point cloud data containing LoD information of a 3D scene is determined, wherein the static geometry encoding point cloud data is represented by G-PCC item data.

In the present embodiment, the G-PCC item data consists of geometry item data and one or more types of attribute item data. The geometry item data and the attribute item data are divided into multiple layers, and each layer consists of a group of uniformly distributed point sets.

S304, partial item data corresponding to partial LoD of the 3D scene in the static geometry encoding point cloud data is decoded.

S306, the partial LoD of the 3D scene is rendered based on the decoded data.

Through the above steps S302 to S306, the problem of low parsing efficiency and long time consumption in the related art caused by being necessary to traverse the complete point cloud data before identifying part of the point cloud data required by users can be solved; part of required item data is determined according to user needs, so that the part of required item data can be obtained without traversing the complete point cloud data, which improves the decoding efficiency, shortens the decoding time, and shortens the rendering waiting time of users.

In the present embodiment, the G-PCC item data is determined by item types in the meta box. The item types at least include: G-PCC item and G-PCC layer item.

In an embodiment, S304 may specifically include: in the case that the item type is the G-PCC item, the partial item data corresponding to one or more layers is determined according to the subsample item property associated with the G-PCC item in the meta box, further, the partial item data corresponding to one or more layers may be determined according to a third subsample data type and layer value in the subsample item property, and the partial item data is decoded.

In an embodiment, S304 may specifically include: in the case that the item type is the G-PCC layer item, the point cloud data containing all details of the 3D static scene is identified according to the complete point cloud group; the partial item data corresponding to one or more layers is determined according to one or more G-PCC layer items in the meta box and a LoD description item property associated with the G-PCC layer item, and the partial item data is decoded. Each of the one or more layers corresponds to a single layer described through the LoD description item property. The LoD description item property at least includes: a point cloud layer value and the number of layer points.

In an embodiment, the complete point cloud group includes: the maximum number of point cloud subsets of partial access that can be divided in a complete point cloud object, types of point cloud subsets, and identifiers of point cloud subsets. The point cloud subsets include a point cloud subset divided according to the LoD.

In an embodiment, one or more media resources associated with the partial item data are determined and obtained. Specifically, one or more media resources associated with the partial item data may be determined and obtained according to the multiple entity play out group. The one or more media resources are decoded while the partial item data is decoded. The one or more media resources are played while the partial LoD of the 3D scene are rendered based on the decoded data.

In the present embodiment, the media resources at least include: videos, audios and dynamic point clouds.

In the present embodiment, 3D point cloud compressed data without time information can be described using an International Organization for Standardization (ISO) Base Media File Format (BMFF), the description of 3D point cloud region information and layer information is supported, and then a partial access mechanism of point cloud data is provided, so that a decoder can select part of 3D point cloud data for parsing, decoding and rendering according to spatial locations and viewing directions of users and other information, thus improving the static point cloud processing efficiency. The partial access of 3D point cloud at least includes the following two ways: partial access based on a region; and progressive access based on a LoD. In the present embodiment, items in the ISO BMFF and related data boxes are used to store static 3D point cloud data and meta information required for the partial access, which can meet the requirements for partial access of the 3D point cloud in various scenes. The specific semantics are further described in the embodiments.

The implementation mode of the embodiment is to store spatial location information, layer information and association relationship information of the static 3D point cloud in media files based on the ISO BMFF. The BMFF can refer to MPEG-4 Part 12 ISO BMFF formulated by the ISO/IEC JTC1/SC29/WG11 Moving Picture Experts Group (MPEG). The static point cloud compressed data format can be operated with refer to the geometrical coding based point cloud compression technology of MPEG-I Part 9: Geometry-based Point Cloud Compression (G-PCC) formulated by the ISO/IEC JTC1/SC29/WG11 MPEG.

All data in an ISOBMFF media file are contained in a box, and their types and sizes may be described in the header of the box. If a box supports nesting (one box contains another sub-box), then this box is called a container box that supports nesting. Static data (such as images) in an ISO BMFF media file are usually stored in an 'item' format. A meta box may store description information of the item and meta, and may also contain a specific load. Integrated storage of multiple static media objects, such as image collection, is supported in the meta box.

The static point cloud data supports the following two basic encapsulation modes.

The first is single-item. Fig. 4 is a schematic diagram of a static point cloud single-item storage structure according to the present embodiment. As shown in Fig. 4, all geometry data and attribute data of the G-PCC point cloud are encapsulated in a single item, parameter information such as a Sequence Parameter Set (SPS), an Attribute Parameter Set (APS), and a Geometry Parameter Set (GPS) and common meta information such as a tile inventory are described in an item property, and the type is 'gpcc', which is associated with the G-PCC item.

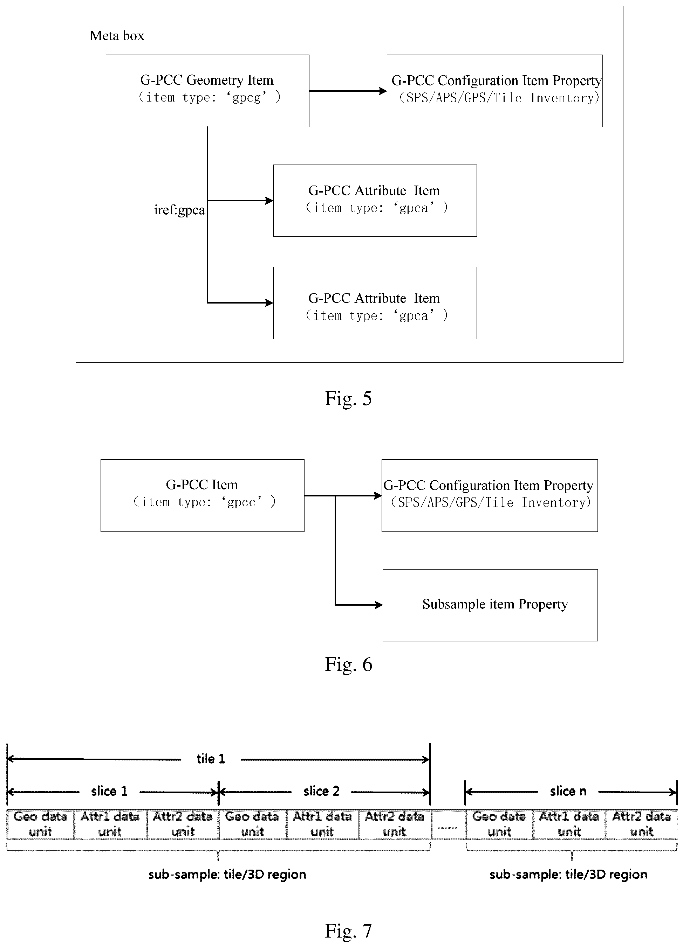

The second is multiple-item. Fig. 5 is a schematic diagram of a static point cloud multiple-item storage structure according to the present embodiment. As shown in Fig. 5, the geometry data and attribute data of the G-PCC point cloud are encapsulated in multiple items respectively, that is, a complete point cloud contains one G-PCC geometry item and one or more G-PCC attribute items, as shown in Fig. 2. The parameter information such as the SPS, the APS and the GPS and the common meta information such as the tile inventory are described in the item property and associated with multiple items, such as multiple geometry data and attribute data. The G-PCC geometry item references one or more attribute items through an Item Reference Box (IREF) of type 'gpcg'.

The embodiments support two basic static point cloud encapsulation formats: single-item and multiple-item. In the further detailed description of the embodiments, the encapsulation format of single-item is taken as an example for extended definition, which is only used for explaining but not limiting the present invention.

Example 1: Partial access to a static point cloud based on a region

The example describes a method for partial access to a static 3D point cloud based on a region, and a method for describing point cloud region information in a media file. For static G-PCC point cloud compressed data that supports the partial access based on a region, the point cloud data corresponding to each region supports independent decoding and rendering.

In the scenes of the example, the following four implementation modes are supported.

The complete point cloud data is stored in a single item. The tile division of the point cloud data is described through bonding box information and subsample item property provided by the tile inventory. The terminal may flexibly select one or more tile subsamples to complete decoding, rendering and other operations according to user needs.

The point cloud data is stored in multiple G-PCC tile items according to different regions, corresponding to the region division in the tile inventory one by one. The terminal may select one or more tile items to complete decoding, rendering, etc.

The complete point cloud data is stored in a single item. The 3D region division of the point cloud data is described through the 3D region item property and the subsample item property. The terminal may select one or more region subsamples to complete decoding, rendering and other operations.

The point cloud data is stored in multiple G-PCC region items according to different regions. Each region item describes the scope of the region through a region item property. The terminal may select one or more region items to complete decoding, rendering, etc.

A parsing process of the terminal includes the following operations.
1) The terminal identifies the items containing the static point cloud data in the meta box according to one of the following item types:
   G-PCC item: gpcc, gpcg, and gpca;
   G-PCC tile item: gpct, gptg, and gpta;
   G-PCC region item: gpcr, gprg, and gpra.
2) The terminal reads the G-PCC configuration item property associated with the G-PCC item, reads the SPS, the APS, the GPS, the tile inventory and other parameter information and configuration information, and completes the initialization of the decoder.
3) The terminal determines the region information and data range of the static point cloud data in one of the following manners.

First manner, the subsample item property is read, if flags is 1 and data_type is 0, a G-PCC tile data range and its tile_id indicated by each subsample are read.

Second manner, the G-PCC tile data range and its tile_id are determined according to the G-PCC tile item.

Third manner, the 3D region item property is read, the coordinates and ranges of each 3D region are parsed, the subsample item property is read, and if flags is 1 and data_type is 1, a G-PCC 3D region data range and its region_id indicated by each subsample are read.

Fourth manner, the G-PCC 3D region data range and its region_id are determined according to the G-PCC region item.
4) The terminal computes based on user needs and region information to determine one or more tiles or 3D regions to be decoded.
5) The terminal reads part of G-PCC data and inputs into the decoder to complete decoding.
6) A renderer renders part of the region of a 3D scene.

### Manner 1: Describing the region division through the subsample

Fig. 6 is a schematic diagram of static point cloud storage based on a subsample according to the present embodiment. As shown in Fig. 6, the complete point cloud data is stored in a single item, and the region division of the point cloud data is described through the subsample item property. Part of the G-PCC point cloud data obtained by the terminal according to the regions is at least one G-PCC tile. The spatial location, scope and other information of the tile are described in the G-PCC configuration item property, and the region division of the point cloud data in the G-PCC item is described using the subsample item property. Taking the basic encapsulation format single-item as an example, a storage structure based on a subsample is shown in Fig. 6.

For the basic encapsulation format multiple-item, the storage structure based on a subsample is similar to that in Fig. 6, except that a static point cloud access entry is the G-PCC geometry item of type 'gpcg' and is associated with the G-PCC configuration item property and the subsample item property. The G-PCC geometry item references one or more G-PCC attribute items of type 'gpca' through the IREF of type 'gpca', and each attribute item is associated with one subsample item property.

Fig. 7 is a schematic diagram of subsample division based on a region according to the present embodiment. As shown in Fig. 7, the G-PCC subsample item property is as follows:

```
   Box type: 'subs'
   Property type: Descriptive item property
   Container: ItemPropertyContainerBox
   Mandatory (per item): No
   Quantity (per item): Zero or more for a G-PCC item
   aligned(8) class SubSamplelnformationBox
       extends FullBox('subs', version, flags) {
       unsigned int(32) entry_count;
       int i,j;
       for (i=0; i < entry_count; i++) {
            unsigned int(32) sample_delta;
   unsigned int(16) subsample_count;
            if (subsample_count > 0) {
                for (j=0; j < subsample_count; j++) {
                    if(version == 1)
                         unsigned int(32) subsample_size;
   else
                         unsigned int(16) subsample_size;
                     unsigned int(8) subsample_priority;
                     unsigned int(8) discardable;
                     unsigned int(32) codec_specific_parameters; } } }
   }
```

When the subsample item property indicates the region division of the G-PCC item, flags is 1, and the codec_specific_parameters extension syntax is as follows:

```
   if (flags == 1) {// distinguishing regions
            unsigned int(1) data_type;
            bit(7) reserved = 0;
            if (data_type == 0)
                unsigned int(24) tile_id;
            else if (data_type == 1)
                unsigned int(24) 3D_region_id;
            else
                bit(24) reserved = 0; }
```

The semantics are as follows:
data_type indicates the region type corresponding to a single subsample; when data_type is 0, it is indicated that the subsample corresponds to the G-PCC tile; when data_type is 0, it is indicated that the subsample corresponds to the 3D region, namely multiple G-PCC tiles;
tile_id indicates a G-PCC tile identifier corresponding to the subsample, which is consistent with the tile identifier in the tile inventory; and
3D_region_id indicates a G-PCC 3D region identifier corresponding to the subsample, which is consistent with the identifier in the 3D region item property.

### Manner 2: Describing the region division through the tile item

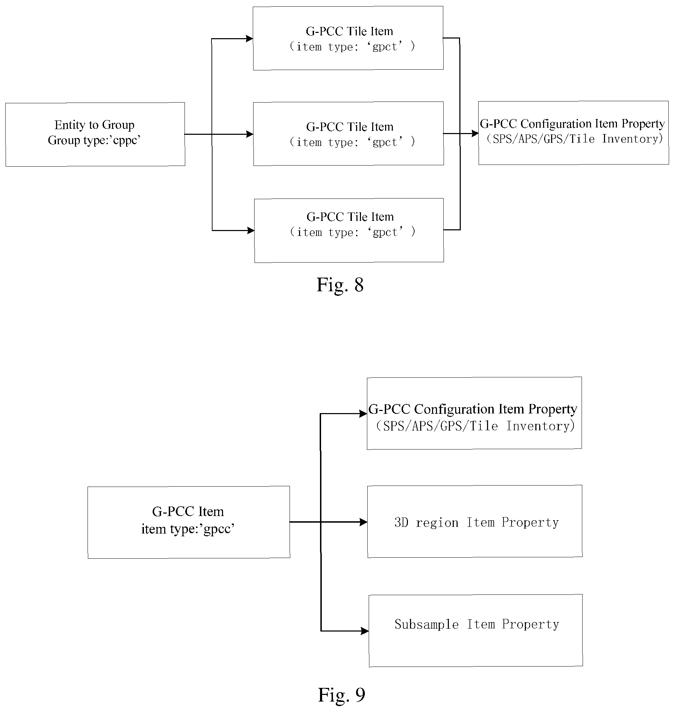

Fig. 8 is a schematic diagram of static point cloud storage based on a tile item according to the present embodiment. As shown in Fig. 8, the embodiment describes a method for partial access to the static 3D point cloud based on multiple items. The point cloud data of different regions are stored in the independent G-PCC tile item, multiple region items are described as a complete static 3D point cloud through a complete point cloud group box, and the group type is 'cppc'. And a mapping relationship between the tile item containing the geometry data and the tile_id in the tile inventory is described in the group. Taking the basic encapsulation format single-item as an example, a static point cloud storage structure based on a tile item is shown in Fig. 8.

For the basic encapsulation format multiple-item, the storage structure based on a tile item is similar to that in Fig. 8, except that the static point cloud access entry is the G-PCC geometry tile item of type 'gptg' and is associated with the G-PCC configuration item property. The G-PCC geometry tile item refers to one or more attribute items of type 'gpta' through the IREF of type 'gpca'.

### G-PCC Tile Item

The type 'gpct' represents the G-PCC tile item, which consists of part of the G-PCC item data, and each tile item represents a point cloud subset that can be decoded independently and belongs to a certain tile, corresponding to the tile description in the tile inventory one by one.

The type 'gptg' represents the G-PCC geometry tile item, which consists of part of the G-PCC item data, and each item represents the point cloud geometry data belonging to a certain tile.

The type 'gpta' represents the G-PCC attribute tile item, which consists of part of the G-PCC item data, and each item represents a type of point cloud attribute data belonging to a certain tile.

```
   CompletePointCloudGroupBox
   Box Types:'cppc'
   Container:GroupsListBox
   Mandatory:No
   Quantity:Zero or more
   aligned(8) class ScalableGroupBox extends EntityToGroupBox('cppc') {
   unsigned int(16) partial_gpcc_num;
   unsigned int (8) tile_enable;
   unsigned int (8) region_enable;
   unsigned int(8) scalable_enable;
       for(i = 0; i <partial_gpcc_num; i++ ){
            unsigned int(8) entry_id;
   if(tile_enable == 1)
   unsigned int(16) tile_id;
   if(region_enable == 1)
   3DSpatialRegionStruct();
   if(scalable_enable == 1)
   unsigned int(16) lod_value;
       }
   }
```

partial_gpcc_num represents the maximum number of subsets of partial access that can be divided in a complete point cloud object;
when the value of tile_enable is 1, it is indicated that the group describes a combination relationship of the tile items, otherwise the value is 0;
when the value of region_enable is 1, it is indicated that the group describes a combination relationship of the region items, otherwise the value is 0;
when the value of scalable_enable is 1, it is indicated that the group describes a combination relationship of the layer items, otherwise the value is 0;
entry_id represents the index of a certain subset G-PCC item (tile item, region item or layer item) in an EntityToGroupBox;
tile_id describes the tile_id corresponding to the tile item;
3DSpatialRegionStruct() describes the region information corresponding to the region item;
lod_value indicates the LoD of the layer item data; the greater the value is, the higher the corresponding level of the subsample data is, and the richer the details are.

This implementation mode is describing the region division of the point cloud based on the tile item. In an CompletePointCloudGroupBox,tile_enable is 1, region_enable and scalable_enable are 0.

### Manner 3: Describing the region division through the 3D region property and the subsample

Fig. 9 is a schematic diagram of static point cloud storage based on a 3D region property and subsample according to the present embodiment. As shown in Fig. 9, part of the G-PCC point cloud data obtained by the terminal according to the region is at least one G-PCC 3D region, that is, one region. All the 3D region information is described through the 3D region item property, including the number, coordinates and ranges of the regions. The spatial location, scope and other information of the tile are described in the G-PCC configuration item property, and the region division of the point cloud data in the G-PCC item is described using the subsample item property. Taking the basic encapsulation format single-item as an example, a static point cloud storage structure based on a 3D region and subsample is shown in Fig. 9.

For the basic encapsulation format multiple-item, the storage structure based on a subsample is similar to that in Fig. 9, except that the static point cloud access entry is the G-PCC geometry item of type 'gpcg' and is associated with the G-PCC configuration item property, the subsample item property, and the 3D region item property. The G-PCC geometry item references one or more attribute items of type 'gpca' through the IREF of type 'gpca'.

### 3D Region Item Property

```
Box type: '3drg'
   Property type: Descriptive item property
   Container: ItemPropertyContainerBox
   Mandatory (per item): No
   Quantity (per item): Zero or one for a G-PCC item
   aligned(8) class 3DSpatialRegionStruct() {
       unsigned int(16) 3d_region_id;
       unsinged int(16) anchor_x;
       unsinged int(16) anchor_y;
       unsinged int(16) anchor_z;
       unsinged int(16) region_dx;
       unsinged int(16) region_dy;
       unsinged int(16) region_dz; }
   aligned(8) class GPCC3DRegionlnfoBox extends FuIIBox('3drg',0,0){
       unsigned int(15) num_regions;
       for (int i=0; i < num_regions; i++) {
            3DSpatialRegionStruct();
            unsigned int(8) num_tiles[i];
            for(int j=0; j < num_tiles; j++)
                unsigned int(16) tile_id[j];
   } } }
```

The semantics are as follows:
3d_region_id indicates the 3D region identifier;
anchor_x anchor_y, and anchor_z indicate the coordinates of the origin of the 3D region;
region_dx region_dy and region_dz, indicate the range of x, y and z directions of the 3D region;
num_regions indicates the number of 3D regions described in the item property;
num_tiles indicates the number of G-PCC tiles contained in each 3D region;
tile_id indicates the G-PCC tile identifier, which is consistent with the tile identifier in the tile inventory.

### Manner 4: Describing the region division through the region item

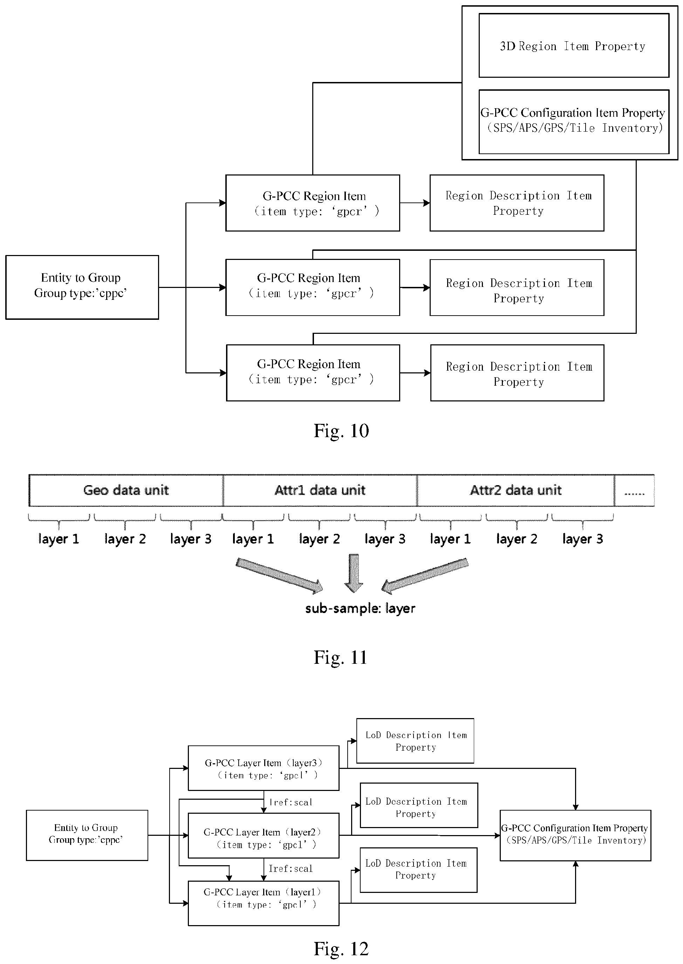

Fig. 10 is a schematic diagram of static point cloud storage based on a region item according to the present embodiment. As shown in Fig. 10, in the method for partial access to a static 3D point cloud based on multiple items, the point cloud data of different regions is stored in independent G-PCC region items, all region division of the point cloud data is described through the attribute information of the 3D region item property, multiple region items containing the geometry data are described as a complete static 3D point cloud through the complete point cloud group box, and the group type is 'cppc'. Taking the basic encapsulation format single-item as an example, a static point cloud storage structure based on a region item is shown in Fig. 10.

For the basic encapsulation format multiple-item, the storage structure based on a region item is similar to that in Fig. 10, except that the static point cloud access entry is the G-PCC geometry region item of type 'gprg' and is associated with the G-PCC configuration item property. The G-PCC geometry region item references one or more attribute items of type 'gpra' through the IREF of type 'gpca'.

### G-PCC Region Item

The type 'gpcr' represents the G-PCC region item, which consists of part of the G-PCC item data, and each region item represents a point cloud subset that can be decoded independently and belongs to a certain region. Each item of type 'gpcr' should be associated with the region description item to provide region description information.

The type 'gprg' represents the G-PCC geometry region item, consisting of part of the G-PCC item data, and each item represents the point cloud geometry data belonging to a certain region.

The type 'gpra' represents the G-PCC attribute region item, which consists of part of the G-PCC item data, and each item represents a type of point cloud attribute data belonging to a certain region.

### Region Description Item Property

```
   Box type: 'rdip'
   Property type: Descriptive item property
   Container: ItemPropertyContainerBox
   Mandatory (per item): No
   Quantity (per item): Zero or one for a G-PCC Region item
   aligned(8) class RegionDescriptionlnfoBox extends FullBox('3drg',0,0){
       3DSpatialRegionStruct();
 }
   CompletePointCloudGroupBox
```

The definition of the CompletePointCloudGroupBox is the same as implementation mode 2. This implementation mode is describing the region division of the point cloud based on the region item. In the CompletePointCloudGroupBox,region_enable is 1, tile_enable and scalable_enable are 0.

### Example 2: Partial access to a static point cloud based on a LoD

The present embodiment describes a method for progressive access to a static 3D point cloud based on a LoD, and a method for describing point cloud level information in a media file. For the static G-PCC point cloud compressed data that supports the progressive access, its geometry data and attribute data may be divided into multiple levels according to geometry locations of the points, and each level consists of a group of uniformly distributed point sets. The higher the level is, the denser the point sets are, and the richer the details of the point cloud object can be observed. The lower the level is, the sparser the point sets are, and the fuzzier the details of the point cloud object can be observed. After obtaining the point cloud compressed data, the terminal may select a proper level for decoding and rendering according to user needs, so as to avoid the waste of decoder resources caused by rendering unnecessary details while ensuring the user experience.

In the scenes of the present embodiment, the following two implementation modes are supported.
1) The complete point cloud data is stored in a single item. The layer division of the point cloud data is described through LoD related parameters described centrally by the SPS and the APS and the attribute information of the subsample item property. The terminal may flexibly select one or more LoD subsamples to complete decoding, rendering and other operations according to user needs.
2) The point cloud data is stored in multiple G-PCC layer items according to different LoD. Each layer item describes the layer value and the number of points through the LoD description item property. The terminal may select one or more layer items to complete decoding, rendering, etc.

A parsing process of the terminal includes the following operations.
1) The terminal identifies the items containing the static point cloud data in the meta box according to one of the following item types:
   G-PCC item: gpcc, gpcg, and gpca;
   G-PCC layer item: gpcl, gplg, and gpla.
2) The terminal reads the G-PCC configuration item property associated with the G-PCC item, reads the SPS, the APS, the GPS, and other parameter information and configuration information, identifies LoD division layer and other related parameter information, and completes the initialization of the decoder.
3) The terminal determines LoD information of the static point cloud data and the range of each layer point cloud data in one of the following manners.

First manner, subsample information (subsample item property) is read, wherein flags is 2, and the layer value, number of points and data range of LoD single layer point cloud data indicated by each subsample are read.

Second manner, the point cloud data range, LoD level value and number of points of each layer are determined according to the G-PCC layer item and the LoD description item property.
4) The terminal computes based on user needs, the LoD layer value and the number of points to determine one or more LoD layers to be decoded.
5) The terminal reads the G-PCC data of part of the layers, and inputs into the decoder to complete decoding.
6) The renderer renders a 3D static scene that contains some details.

### Manner 1: Describing the LoD layer division through the subsample

The present embodiment describes a method for progressive access to a static 3D point cloud based on a LoD, and a method for describing point cloud level information in a media file. For the static G-PCC point cloud compressed data that supports the progressive access, its complete point cloud data is stored in a single item, and the layer division of the point cloud data is described through the attribute information of the subsample item property. Taking the basic encapsulation format single-item as an example, a multi-layer static point cloud storage structure based on a subsample is shown in Fig. 6.

For the basic encapsulation format multiple-item, the storage structure based on a subsample is similar to that in Fig. 6, except that the static point cloud access entry is the G-PCC geometry item of type 'gpcg' and is associated with the G-PCC configuration item property and the subsample item property. The G-PCC geometry item refers to one or more attribute items of type 'gpca' through the IREF of type 'gpca'.

Fig. 11 is a schematic diagram of subsample division based on level information according to the present embodiment. As shown in Fig. 11, the G-PCC subsample item property is as follows.

When the subsample item property indicates the region division of the G-PCC item, flags is 2, and the codec_specific_parameters extension syntax is as follows:

```
   if (flags == 2) {
            unsigned int(8) lod_value;
            unsigned int(24) point_count; }
```

The semantics are as follows:
lod_value indicates the LoD of the G-PCC subsample; the greater the value is, the higher the corresponding level of the subsample data is, and the richer the details are;
point_count indicates the number of points that the G-PCC subsample contains.

### Manner 2: Describing the LoD layer division through the layer item

Fig. 12 is a schematic diagram of static point cloud storage based on a layer item according to the present embodiment. As shown in Fig. 12, the embodiment describes another method for partial access to a static 3D point cloud based on a LoD. In the method, the point cloud data of different regions is stored in independent G-PCC layer items, the level value, the number of points and other information of the layer item are described through the attribute information of the LoD description item property, and multiple layer items containing the geometry data are combined into a complete static 3D point cloud through the type 'gpcc'. Taking the basic encapsulation format single-item as an example, a static point cloud storage structure based on a layer item is shown in Fig. 12.

For the basic encapsulation format multiple-item, the storage structure based on a layer item is similar to that in Fig. 12, except that the static point cloud access entry is the G-PCC geometry layer item of type 'gplg' and is associated with the G-PCC configuration item property. The G-PCC geometry layer item references one or more attribute items of type 'gpla' through the IREF of type 'gpca'.

### G-PCC Layer Item

The type 'gpcl' represents the G-PCC layer item, which consists of part of the G-PCC item data, and each layer item represents a point cloud subset that can be decoded independently and belongs to a certain level. Each item of type 'gpcl' should be associated with the LoD description item property, providing the level value, the number of points and other description information of the level.

The type 'gplg' represents the G-PCC geometry layer item, which consists of part of the G-PCC item data, and each item represents the point cloud geometry data belonging to a certain level.

The type 'gpla' represents the G-PCC attribute layer item, which consists of part of the G-PCC item data, and each item represents a type of point cloud attribute data belonging to a certain level.

### LoD Description Item Property

```
   Box type: 'lodd'
   Property type: Descriptive item property
   Container: ItemPropertyContainerBox
   Mandatory (per item): No
   Quantity (per item): Zero or one for a G-PCC Layer item
   aligned(8) class RegionDescriptionlnfoBox extends FullBox(",0,0){
            unsigned int(8) lod_value;
            unsigned int(24) point_count; }
```

The semantics are as follows:
lod_value indicates the LoD of the G-PCC subsample; the greater the value is, the higher the corresponding level of the subsample data is, and the richer the details are;
point_count indicates the number of points that the G-PCC subsample contains.

### CompletePointCloudGroupBox

The definition of the CompletePointCloudGroupBox is the same as example 1. This implementation mode is describing the layer division of the point cloud based on the layer item. In the CompletePointCloudGroupBox,scalable_enable is 1, tile_enable and region_enable are 0.

### Example 3: Partial access based on both region and LoD

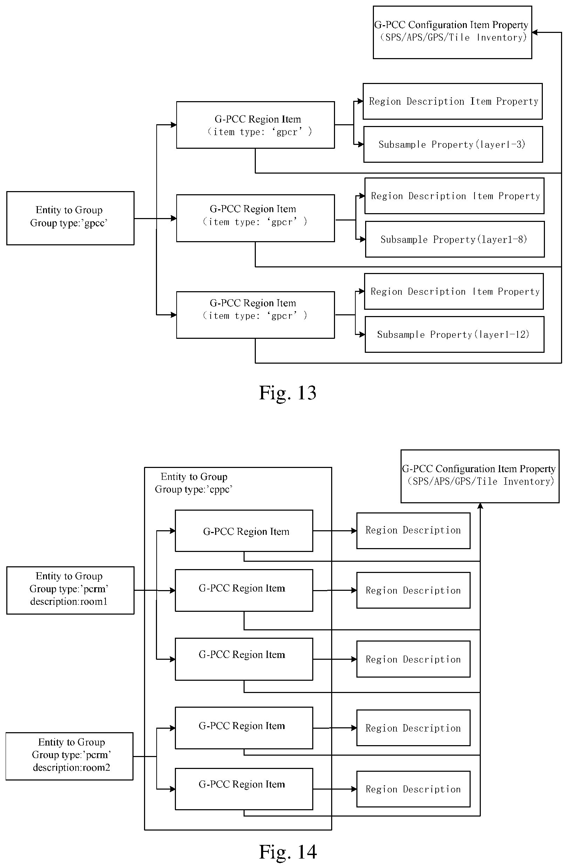

This embodiment describes a method for partial access to a static 3D point cloud based on a region and a LoD. Different regions may be divided into some detail levels according to the density of the point cloud. Fig. 13 is a schematic diagram of static point cloud storage based on a region and LoD according to the present embodiment. Taking the basic encapsulation format single-item as an example, a static point cloud storage structure based on a region and a LoD is shown in Fig. 13. The point cloud data of different regions is stored in independent G-PCC region items. The level information of the point cloud data in each region is described through the attribute information of the subsample item property. Three G-PCC region items correspond to three layer divisions: 3 layers, 8 layers, and 12 layers. Multiple region items are combined into a complete static 3D point cloud through the type 'gpcc'.

### Example 4: Partial access to a static point cloud based on an intention of creator

This embodiment also provides a method for partial access to a static 3D point cloud based on an intention of creator. For the static 3D point clouds such as a city, street and large building, a content creator may mark the point cloud data in acquisition, coding and encapsulation stages of the 3D point clouds, such as floor division and room division of large buildings, and block division of street scenes. Moreover, static 3D point cloud scenes may be displayed in association with other media objects. For example, different audio explanations are provided for different areas of street scenes or digital museums, and different floors in large buildings correspond to different people and other dynamic point cloud objects.

For the above two scenes, this implementation may be divided into the following two implementation modes:
region marking, that is, multiple items are combined; and
associative display of static point clouds dynamic media contents, that is, an item is combined with a track.

### Mode 1: Region marking

Fig. 14 is a schematic diagram of static point cloud region marking according to the present embodiment. In the implementation mode, point cloud data subsets in multiple different regions are combined through a region marking group box, and content description information is provided. Taking the basic encapsulation format single-item as an example, a static point cloud storage structure that supports region marking is shown in Fig. 14. A complete point cloud object may be divided into five region items according to different regions, corresponding to two room scenes respectively, which are marked by an entity to group box of type 'pcrm', and the information of two room scenes are described respectively.

### RegionMarkingGroupBox

```
   Box Types: 'pcrm'
   Container: GroupsListBox
   Mandatory: No
   Quantity: Zero or more
   aligned(8) class RegionMarkingGroupBox extends EntityToGroupBox('pcrm') {
   unsigned int(8) region_type;
   string region_description;
   }
```

The semantics are as follows:
egion_type provids a marking type of part of the item data corresponding to EntitytoGroup;
region_description which is a null-ended UTF-8 character string provids text description information of the mark of the point cloud.

### Mode 2: Rendering a static point cloud together with a dynamic point cloud

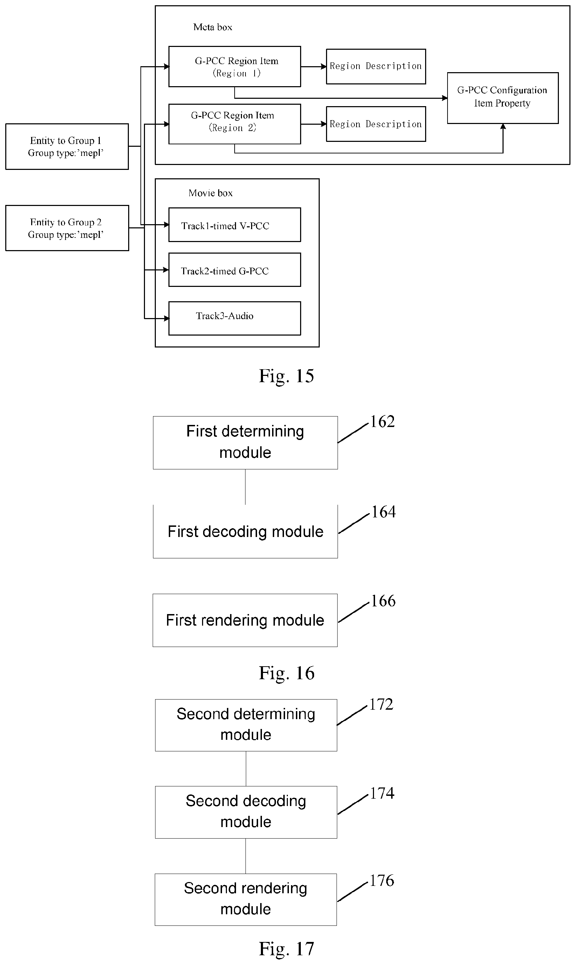

Fig. 15 is a schematic diagram of associated storage between a static point cloud and a dynamic point cloud according to an embodiment. Point cloud data subsets in multiple different areas are combined through a multiple entity play out group box, and content description information is provided. Taking the basic encapsulation form single-item as an example, an associated storage structure of static point cloud and dynamic point cloud is shown in Fig. 15.

A static point cloud object contained in the meta box may be divided into the G-PCC region items according to different regions: region 1 and region 2. The G-PCC region 1 is associated with the dynamic point cloud objects in a movie box, and association information is described through the multiple entity play out group box, indicating that the G-PCC region 1 needs to be displayed together with the point cloud data that track 1 contains. The G-PCC region 2 is associated with the dynamic point cloud objects and audios in the movie box, and association information is described through the Multiple Entity Play out Group Box, indicating that the G-PCC region 2 needs to be displayed together with the point cloud data that track 2 contains and the audio data that track 3 contains.

### MultipleEntityPlayoutGroupBox

```
   Box Types: 'mepl'
   Container: GroupsListBox
   Mandatory: No
   Quantity: Zero or more
   aligned(8) class MultipleEntityPlayoutGroupBox extends EntityToGroupBox('mepl') {
   }
```

According to another embodiment of the present invention, a point cloud data processing device is also provided. Fig. 16 is block diagram 1 of a point cloud data processing device according to the present embodiment. As shown in Fig. 16, the device may include: a first determining module 162, a first decoding module 164, and a first rendering module 166.

The first determining module 162 is configured to determine the static geometry encoding point cloud data containing the region information of a 3D scene. The static geometry encoding point cloud data is represented by the G-PCC item data.

The first decoding module 164 is configured to decode the partial item data corresponding to the partial region of the 3D scene in the static geometry encoding point cloud data.

The first rendering module 166 is configured to render the partial region of the 3D scene based on the decoded data.

In an embodiment, the G-PCC item data is determined by the item types in the meta box. The item types at least include: G-PCC item, G-PCC tile item, and G-PCC region item.

In an embodiment, the first determining module may include a first determining submodule.

The first determining submodule is configured to, in the case that the item type is the G-PCC item, determine the partial item data corresponding to one or more tiles according to the subsample item property associated with the G-PCC item in the meta box, and decode the partial item data.

In an embodiment, the first determining submodule is further configured to:
determine the partial item data corresponding to one or more tiles according to the first subsample data type and tile identifier in the subsample item property.

In an embodiment, the first determining module may include a second determining submodule.

The second determining submodule is configured to, in the case that the item type is the G-PCC item, determine the partial item data corresponding to one or more regions according to the subsample item property associated with the G-PCC item in the meta box and the 3D region item property, and decode the partial item data.

In an embodiment, the second determining submodule is further configured to:
determine the partial item data corresponding to one or more regions according to the second subsample data type and region identifier in the subsample item property.

In an embodiment, the 3D region item property includes:
the number of regions, the descriptive information of regions, the number of tiles that regions contain, and the identifiers corresponding to the tiles that regions contain.

In an embodiment, the descriptive information of regions includes: the region identifiers, the anchor point coordinates, and the length, width and height of regions.

In an embodiment, the first determining module may include: a first identifying submodule and a third determining submodule.

The first identifying submodule is configured to, in the case that the item type is the G-PCC tile item, identify the point cloud data containing the 3D static scene according to the complete point cloud group.

The third determining submodule is configured to determine the partial item data corresponding to one or more tiles according to the point cloud tile inventory in the G-PCC configuration item property and one or more G-PCC tile items in the meta box, and decode the partial item data.

In an embodiment, the G-PCC tile item contains a single tile described in the point cloud tile inventory. Each of the one or more tiles represents the data subset that can be decoded independently in the point cloud region.

In an embodiment, the first determining module may include: a second identifying submodule and a fourth determining submodule.

The second identifying submodule is configured to, in the case that the item type is the G-PCC region item, identify the point cloud data containing the 3D static scene according to the complete point cloud group.

The fourth determining submodule is configured to determine the partial item data corresponding to one or more point cloud regions according to one or more G-PCC region items in the meta box and the region descriptive item property associated with the G-PCC region item, and decode the partial item data.

In an embodiment, each of the one or more point cloud regions corresponds to a single region described through the region descriptive item property.

In an embodiment, the region descriptive item property includes: the region identifiers, the anchor point coordinates, and the length, width and height of regions.

In an embodiment, the complete point cloud group includes:
the maximum number of point cloud subsets of partial access that can be divided in a complete point cloud object, the types of point cloud subsets, and the identifiers of point cloud subsets. The point cloud subsets include: the point cloud subset divided according to the tile and the point cloud subset divided according to the region.

In an embodiment, the first determining module may include: a fifth determining submodule.

The fifth determining submodule is configured to, in the case that the item type is the G-PCC region item, determine the partial item data used for indicating the marking scene according to the region marking group, and decode the partial item data.

In an embodiment, the region marking group at least includes a marking type and a marking text. Part of the G-PCC item used for indicating the marking scene is described through the marking type and the marking text.

In an embodiment, the device may also include: a first resource determining module, a first resource decoding module, and a first playing module.

The first resource determining module is configured to determine and obtain one or more media resources associated with the partial item data.

The first resource decoding module is configured to decode the one or more media resources while decoding the partial item data.

The first playing module is configured to play the one or more media resources while rendering the partial region of the 3D scene based on the decoded data.

In an embodiment, the first resource determining module is further configured to:
determine and obtain one or more media resources associated with the partial item data according to the multiple entity play out group.

In an embodiment, the media resources at least include: videos, audios and dynamic point clouds.

In an embodiment, the G-PCC item data consists of geometry item data and one or more types of attribute item data.

According to another embodiment of the present invention, a point cloud data processing device is also provided. Fig. 17 is block diagram 2 of a point cloud data processing device according to the present embodiment. As shown in Fig. 17, the device may include: a second determining module 172, a second decoding module 174, and a second rendering module 176.

The second determining module 172 is configured to determine the static geometry encoding point cloud data containing the LoD information of a 3D scene. The static geometry encoding point cloud data is represented by the G-PCC item data.

The second decoding module 174 is configured to decode the partial item data corresponding to the partial LoD of the 3D scene in the static geometry encoding point cloud data.

The second rendering module 176 is configured to render the partial LoD of the 3D scene based on the decoded data.

In an embodiment, the G-PCC item data is determined by the item types in the meta box. The item types at least include: G-PCC item and G-PCC layer item.

In an embodiment, the second determining module may include: a sixth determining submodule.

The sixth determining submodule is configured to, in the case that the item type is the G-PCC item, determine the partial item data corresponding to one or more layers according to the subsample item property associated with the G-PCC item in the meta box, and decode the partial item data.

In an embodiment, the sixth determining submodule is further configured to:
determine the partial item data corresponding to one or more layers according to the third subsample data type and layer value in the subsample item property.

In an embodiment, the second determining module may include: a second identifying submodule and a seventh determining submodule.

The second identifying submodule is configured to, in the case that the item type is the G-PCC layer item, identify the point cloud data containing all details of the 3D static scene according to the complete point cloud group.

The seventh determining submodule is configured to determine the partial item data corresponding to one or more layers according to one or more G-PCC layer items in the meta box and the LoD description item property associated with the G-PCC layer item, and decode the partial item data.

In an embodiment, each of the one or more layers corresponds to a single layer described through the LoD description item property.

In an embodiment, the LoD description item property at least includes: the point cloud layer value and the number of layer points.

In an embodiment, the complete point cloud group includes:
the maximum number of point cloud subsets of partial access that can be divided in a complete point cloud object, the types of point cloud subsets, and the identifiers of point cloud subsets. The point cloud subsets include the point cloud subset divided according to the LoD.

In an embodiment, the device may also include: a second resource determining module, a second resource decoding module, and a second playing module.

The second resource determining module is configured to determine and obtain one or more media resources associated with the partial item data.

The second resource decoding module is configured to decode the one or more media resources while decoding the partial item data.

The second playing module is configured to play the one or more media resources while rendering the partial LoD of the 3D scene based on the decoded data.

In an embodiment, the second resource determining module may include an eighth determining submodule.

The eighth determining submodule is configured to determine and obtain one or more media resources associated with the partial item data according to the multiple entity play out group.

In an embodiment, the media resources at least include: videos, audios and dynamic point clouds.

In an embodiment, the G-PCC item data consists of the geometry item data and one or more types of attribute item data. The geometry item data and the attribute item data are divided into multiple layers, and each layer consists of a group of uniformly distributed point sets.

It is to be noted that, each of the above modules may be realized by software or hardware. For the latter, the each of the above modules may be realized by, but not limited to, the following way: all of the above modules are in the same processor; or, the above modules are respectively in different processors in form of any combination.

The embodiments of the present invention also provide a computer-readable storage medium, in which a computer program is stored. The computer program is configured to perform, when running, the steps in any of the above method embodiments.

In an exemplary embodiment, the computer-readable storage media may include, but are not limited to, a USB flash disk, a Read-Only Memory (ROM), a Random Access Memory (RAM), a mobile hard disk, a magnetic disk, a compact disc, and other media capable of storing the computer program.

An embodiment of the present invention also provides an electronic device, which includes a memory and a processor. The memory stores a computer program. The processor is configured to run the computer program, so as to execute the steps in any of the above method embodiments.

In an exemplary embodiment, the electronic device may also include a transmission device and an input/output device. The transmission device is connected with the processor, and the input/output device is connected with the processor.

The specific examples in the present embodiment may refer to the examples described in the above embodiments and exemplary implementation modes, and will not be repeated here.

It is apparent that those skilled in the art should appreciate that the above modules and steps of the present invention may be implemented by a general-purpose computing device, and they may be centralized in a single computing device or distributed on a network composed of multiple computing devices; they may be implemented by a program code which is capable of being executed by the computing device, so that they may be stored in a storage device and executed by the computing device; and in some situations, the presented or described steps may be executed in an order different from that described here; or they are made into integrated circuit modules, respectively; or multiple modules and steps of them are made into a single integrated circuit module to realize. Therefore, the present invention is not limited to any particular combination of hardware and software.

The above is only the preferred embodiments of the present invention and not intended to limit the present invention; for those skilled in the art, the present invention may have various modifications and changes. Any modifications, equivalent replacements, improvements and the like within the principle of the present invention should fall within the protection scope of the claims of the present invention.

## Claims

1. A method for processing point cloud data, comprising:
determining static geometry encoding point cloud data containing region information of a 3D scene, wherein the static geometry encoding point cloud data is represented by Geometry-based Point Cloud Compression ,G-PCC, item data;
decoding partial item data corresponding to partial region of the 3D scene in the static geometry encoding point cloud data; and
rendering the partial region of the 3D scene based on the decoded data.

2. The method according to claim 1, wherein the G-PCC item data is determined by item types in a meta box, wherein the item types at least comprise: G-PCC item, G-PCC tile item, and G-PCC region item.

3. The method according to claim 2, wherein decoding partial item data corresponding to partial region of the 3D scene in the static geometry encoding point cloud data comprises:
in the case that the item type is the G-PCC item, determining the partial item data corresponding to one or more tiles according to a subsample item property associated with the G-PCC item in the meta box, and decoding the partial item data.

4. The method according to claim 3, wherein determining the partial item data corresponding to one or more tiles according to a subsample item property associated with the G-PCC item in the meta box comprises:
determining the partial item data corresponding to one or more tiles according to a first subsample data type and tile identifier in the subsample item property.

5. The method according to claim 2, wherein decoding partial item data corresponding to partial region of the 3D scene in the static geometry encoding point cloud data comprises:
in the case that the item type is the G-PCC item, determining the partial item data corresponding to one or more regions according to the subsample item property associated with the G-PCC item in the meta box and a 3D region item property, and decoding the partial item data.

6. The method according to claim 5, wherein determining the partial item data corresponding to one or more regions according to the subsample item property associated with the G-PCC item in the meta box and a 3D region item property comprises:
determining the partial item data corresponding to one or more regions according to a second subsample data type and region identifier in the subsample item property.

7. The method according to claim 5, wherein the 3D region item property comprises:
the number of regions, descriptive information of regions, the number of tiles that regions contain, and identifiers corresponding to the tiles that regions contain.

8. The method according to claim 7, wherein the descriptive information of regions comprises:
region identifiers, anchor point coordinates, and the length, width and height of the regions.

9. The method according to claim 2, wherein decoding the partial item data corresponding to the partial region of the 3D scene in the static geometry encoding point cloud data comprises:
in the case that the item type is the G-PCC tile item, identifying the G-PCC item data containing the 3D scene according to a complete point cloud group;
determining the partial item data corresponding to one or more tiles according to a point cloud tile inventory in a G-PCC configuration item property and one or more G-PCC tile items in the meta box, and decoding the partial item data.

10. The method according to claim 9, wherein the G-PCC tile item contains a single tile described in the point cloud tile inventory, wherein each of the one or more tiles represents a data subset that can be decoded independently in the point cloud region.

11. The method according to claim 2, wherein decoding the partial item data corresponding to the partial region of the 3D scene in the static geometry encoding point cloud data comprises:
in the case that the item type is the G-PCC region item, identifying the point cloud data containing the 3D static scene according to the complete point cloud group; and
determining the partial item data corresponding to one or more point cloud regions according to one or more G-PCC region items in the meta box and a region descriptive item property associated with the G-PCC region item, and decoding the partial item data.

12. The method according to claim 11, wherein each of the one or more point cloud regions corresponds to a single region described through the region descriptive item property.

13. The method according to claim 11, wherein the region descriptive item property comprises:
region identifiers, anchor point coordinates, and the length, width and height of regions.

14. The method according to any one of claims 9 to 13, wherein the complete point cloud group comprises:
the maximum number of point cloud subsets of partial access that can be divided in a complete point cloud object, types of point cloud subsets, and identifiers of point cloud subsets, wherein the point cloud subsets comprise: a point cloud subset divided according to the tile and a point cloud subset divided according to the region.

15. The method according to claim 2, wherein decoding the partial item data corresponding to the partial region of the 3D scene in the static geometry encoding point cloud data comprises:
in the case that the item type is the G-PCC region item, determining the partial item data used for indicating a marking scene according to a region marking group, and decoding the partial item data.

16. The method according to claim 15, wherein the region marking group at least comprises a marking type and a marking text; part of the G-PCC item used for indicating a marking scene is described through the marking type and the marking text.

17. The method according to any one of claims 1 to 13 and claims 15 to 16, further comprising:
determining and obtaining one or more media resources associated with the partial item data;
decoding the one or more media resources while decoding the partial item data; and
playing the one or more media resources while rendering the partial region of the 3D scene based on the decoded data.

18. The method according to claim 17, wherein determining and obtaining one or more media resources associated with the partial item data comprises:
determining and obtaining one or more media resources associated with the partial item data according to a multiple entity play out group.

19. The method according to claim 17, wherein the media resources at least comprises: video, audio and dynamic point cloud.

20. The method according to any one of claims 1 to 13, 15, 16, 18 and 19, wherein the G-PCC item data consists of geometry item data and one or more types of attribute item data.

21. A method for processing point cloud data, comprising:
determining static geometry encoding point cloud data containing Level of Details ,LoD, information of a 3D scene, wherein the static geometry encoding point cloud data is represented by Geometry-based Point Cloud Compression ,G-PCC, item data;
decoding partial item data corresponding to partial LoD of the 3D scene in the static geometry encoding point cloud data; and
rendering the partial LoD of the 3D scene based on the decoded data.

22. The method according to claim 21, wherein the G-PCC item data is determined by item types in a meta box, wherein the item types at least comprise: G-PCC item and G-PCC layer item.

23. The method according to claim 22, wherein decoding the partial item data corresponding to the partial LoD of the 3D scene in the static geometry encoding point cloud data comprises:
in the case that the item type is the G-PCC item, determining the partial item data corresponding to one or more layers according to a subsample item property associated with the G-PCC item in the meta box, and decoding the partial item data.

24. The method according to claim 23, wherein determining the partial item data corresponding to one or more layers according to a subsample item property associated with the G-PCC item in the meta box comprises:
determining the partial item data corresponding to one or more layers according to a third subsample data type and layer value in the subsample item property.

25. The method according to claim 22, wherein decoding the partial item data corresponding to the partial LoD of the 3D scene in the static geometry encoding point cloud data comprises:
in the case that the item type is the G-PCC layer item, identifying the G-PCC item data containing all details of the 3D static scene according to a complete point cloud group; and
determining the partial item data corresponding to one or more layers according to one or more G-PCC layer items in the meta box and a LoD description item property associated with the G-PCC layer item, and decoding the partial item data.

26. The method according to claim 25, wherein each of the one or more layers corresponds to a single layer described through the LoD description item property.

27. The method according to claim 25, wherein the LoD description item property at least comprises:
a point cloud layer value and the number of layer points.

28. The method according to any one of claims 23 to 27, wherein the complete point cloud group comprises:
the maximum number of point cloud subsets of partial access that can be divided in a complete point cloud object, types of point cloud subsets, and identifiers of point cloud subsets, wherein the point cloud subsets comprise a point cloud subset divided according to the LoD.

29. The method according to any one of claims 21 to 27, further comprising:
determining and obtaining one or more media resources associated with the partial item data;
decoding the one or more media resources while decoding the partial item data; and
playing the one or more media resources while rendering the partial LoD of the 3D scene based on the decoded data.

30. The method according to claim 29, wherein determining and obtaining one or more media resources associated with the partial item data comprises:
determining and obtaining one or more media resources associated with the partial item data according to a multiple entity play out group.

31. The method according to claim 30, wherein the media resources at least comprise: videos, audios and dynamic point clouds.

32. The method according to any one of claims 21 to 27, and claims 30 to 31, wherein the G-PCC item data consists of geometry item data and one or more types of attribute item data; the geometry item data and the attribute item data are divided into multiple layers, and each layer consists of a group of uniformly distributed point sets.

33. A device for processing point cloud data, comprising:
a first determining module, configured to determine static geometry encoding point cloud data containing region information of a 3D scene, wherein the static geometry encoding point cloud data is represented by Geometry-based Point Cloud Compression ,G-PCC, item data;
a first decoding module, configured to decode partial item data corresponding to partial region of the 3D scene in the static geometry encoding point cloud data; and
a first rendering module, configured to render the partial region of the 3D scene based on the decoded data.

34. A device for processing point cloud data, comprising:
a second determining module, configured to determine static geometry encoding point cloud data containing Level of Details ,LoD, information of a 3D scene, wherein the static geometry encoding point cloud data is represented by Geometry-based Point Cloud Compression ,G-PCC, item data;
a second decoding module, configured to decode partial item data corresponding to partial LoD of the 3D scene in the static geometry encoding point cloud data; and
a second rendering module, configured to render the partial LoD of the 3D scene based on the decoded data.

35. A computer-readable storage medium, in which a computer program is stored, wherein the computer program is configured to execute, when running, the method as clamed in any one of claims 1 to 20 and claims 21 to 32.

36. An electronic device, comprising a memory and a processor, wherein the memory stores a computer program, and the processor is configured to run the computer program to execute the method as clamed in any one of claims 1 to 20 and 21 to 32.
